# EUROPÄISCHE PATENTSCHRIFT

(11) **EP 1 418 998 B1**
(45) Veröffentlichungstag und Bekanntmachung des Hinweises auf die Patenterteilung: **26.10.2005**
(21) Anmeldenummer: 02754954.2
(22) Anmeldetag: 30.07.2002
(51) Int. Cl.: B01D 21/26, B04B 5/04

(54) **VERFAHREN ZUR ABTRENNUNG VON BLUTPLASMAPARTIKELN AUS EINER BLUTPLASMASUSPENSION**
METHOD FOR THE SEPARATION OF BLOOD PLASMA PARTICLES FROM A BLOOD PLASMA SUSPENSION
PROCEDE DE SEPARATION DE PARTICULES DE PLASMA SANGUIN CONTENUES DANS UNE SUSPENSION DE PLASMA SANGUIN

(30) Priorität: 10.08.2001 DE 10139466
(43) Veröffentlichungstag der Anmeldung: 19.05.2004
(73) Patentinhaber: Bayer Technology Services GmbH, 51368 Leverkusen (DE); BAYER CORPORATION, Pittsburgh, PA 15205 (US)
(72) Erfinder: SCHOLZ, Jürgen, 51375 Leverkusen (DE); LONGERICH, Markus, 50937 Köln (DE); HIMMEN, Ernst-Ulrich, 51519 Odenthal (DE); ESSER, Ulrich, 51515 Kürten (DE); SHARMA, Rajesh, Cary, NC 27519 (US); PATWARDHAN, Anshuman, V., Cary, NC 27513 (US)
(74) Vertreter: Feldhues, Michael L.F.
(86) Internationale Anmeldenummer: PCT/EP2002/008444
(87) Internationale Veröffentlichungsnummer: WO 2003/013686

(56) Entgegenhaltungen:
- WO-A-00/67911
- US-A- 5 328 441
- US-A- 5 743 840

## Beschreibung

Die Erfindung betrifft ein Verfahren zur Abtrennung von Blutplasmapartikeln von der flüssigen Phase einer Blutplasmasuspension, wie sie typischerweise in der Fraktionierung von Human-Blutplasma vorkommt.

Nach derzeitigem Stand der Technik werden Blutplasmasuspensionen durch vertikale Vollmantelzentrifugen, Kammerseparatoren oder über Filtrationsverfahren separiert.

Die Filtration von Blutplasma wird über Filterpressen oder vertikal angeordneten Druckdrehfiltern durchgeführt. Die damit erzielbare Durchsatzleistung ist relativ hoch. Hierbei muss der Suspension allerdings in den meisten Fällen ein Filterhilfsmittel, ein poröses, feinpartikuläres Material, welches die Durchlässigkeit des sich im Filter bildenden Filterkuchens erhöht, zugesetzt werden. Dies hat einen bedeutenden Einfluss auf den Prozess zur Weiterverarbeitung zum Endprodukt.

Bei der Anwendung von Filtern zur Abtrennung von Blutplasmapartikeln ist aber vor allem die aufwendige manuelle Handarbeit problematisch, die zum Entleeren des Filters sowie zur Reinigung erforderlich ist und die damit verbundene Kontaminationsgefahr für das Bedienpersonal sowie das Produkt gleichermaßen. Weiterer Nachteil dieses Verfahrens ist, dass die nach dem Stand der Technik verwendeten Filter nicht kühlbar sind und der Prozess daher bei vergleichsweise geringen Umgebungstemperaturen durchgeführt werden muss. Dies hat hohe Raumkonditionierungskosten zur Folge.

Alternativ ist die Abtrennung von Blutplasmapartikeln in Kammerseparatoren bekannt. Kammerseparatoren zeichnen sich durch eine auf einer stehenden Spindel gelagerten Trommel ohne automatischen Austrag des abgetrennten Feststoffs aus, die von oben über eine stehende Leitung befüllt wird und zur Verbesserung der Klärwirkung meist in mehrere Kammern unterteilt ist. Diese Zentrifugen sind über das Gehäuse kühlbar. Die Durchsatzleistung ist relativ hoch. Die Anwendung von Kammerseparatoren zur Abtrennung von Blutplasmapartikeln hat allerdings ebenfalls den Nachteil, dass die Trommel und andere produktberührte Bauteile von Hand ausgeräumt und gereinigt werden müssen und damit eine hohe Kontaminationsgefahr für das Bedienungspersonal und das Produkt besteht. Auch ist bei diesem Maschinentyp keine Ausführung bekannt, bei der die Antriebseinheit räumlich von der Verfahrenseinheit getrennt ist, was hinsichtlich der steigenden Hygieneanforderungen wünschenswert ist.

Ein mehr automatisiertes Verfahren zur Abtrennung von Blutplasmapartikeln ist mit dem Einsatz einer vertikalen Vollmantelzentrifuge mit Schabereinrichtung möglich. Es ist bekannt, dass sich mit diesem Zentrifugentyp ein automatischer Feststoffaustrag und eine automatisierte Reinigung der Trommel und der produktberührten Teile realisieren lässt. Zentrifugen dieses Typs erreichen ihre Trennleistung vor allem durch sehr hohe Trommeldrehzahlen. Trotzdem ist die Trennleistung wegen der konstruktiv bedingt begrenzten Oberfläche, auf der sich die Blutplasmapartikeln absetzen, limitiert. Die bei Zentrifugen diesen Typs entstehenden hohen Umfangsgeschwindigkeiten erfordern eine relativ hohe Kühlleistung, um die Trommel und das in der Trommel befindliche Produkt im gewünschten Temperaturbereich zu halten. Daher wird vielfach der die Trommel umgebende Raum unter Vakuum gesetzt, um damit die Luftreibungswärme zu reduzieren. Der Austrag des Feststoffs geschieht über ein Schabersystem, welches den abgeschiedenen Feststoff automatisch aus der Trommel ausschabt. Der Feststoff fällt dann in einen unterhalb der Trommel angeordneten Behälter. Wegen der relativ aufwendigen Bauweise ist der Einsatz von vertikalen Vollmantelzentrifugen mit Schabersystem zur Abtrennung von Blutplasmapartikeln relativ teuer und Montagearbeiten sind häufig aufwendig.

Die Erfindung zielt gegenüber den bekannten Verfahren zur Abtrennung von Blutplasmapartikeln darauf ab, die wesentlichen Vorteile der genannten manuellen Verfahren, d. h. der Anwendung eines Kammerseparators oder der Filtration, mit den wesentlichen Vorteilen des automatisierten Verfahrens, d.h. ähnlich der Anwendung einer vertikalen Vollmantelzentrifuge, zu schaffen. Aufgabe der Erfindung ist daher ein kostengünstiges und einfaches, dabei aber ebenfalls vollautomatisiertes Zentrifugierverfahren mit hoher maschinenbezogener Durchsatzleistung zur Abtrennung von Blutplasmapartikeln aus einer Suspension bereitzustellen, welches aber mit einer Trommelkühlung ohne Vakuum im Drehraum der Trommel auskommt und insbesondere zur Erfüllung der hohen Hygienestandards eine Trennung von Verfahrens- und Antriebsraum aufweist. Konstruktionsbedingt sollen Montagearbeiten an dazu verwendeten Maschinen vergleichsweise einfach durchzuführen sein.

Erfindungsgemäß wird dieses Ziel erreicht durch den Einsatz einer automatisierten Zentrifuge mit Tellereinbauten zur Vergrößerung der trennaktiven Fläche zur Abtrennung von Blutplasmapartikeln aus einer Blutplasmasuspension mit den Merkmalen des Anspruches 1.

Gegenstand der Erfindung ist ein Verfahren zur Abtrennung von Blutplasmapartikeln aus einer Blutplasmasuspension in einer selbstaustragenden Zentrifuge, wenigstens aufweisend ein gegebenenfalls kühlbares Gehäuse, eine Zuleitung für die Suspension, eine Ableitung für die geklärte Flüssigkeit, eine Trommel, die insbesondere hängend angeordnet mit einem obenliegenden Antriebsteil verbunden ist, zwei oder mehr Austragsschlitzen und axial gestapelten Tellereinbauten versehen ist, und einen gegebenenfalls kühlbar ausgeführten Auffangbehälter, wobei das Verfahren wenigstens besteht aus den Verfahrensschritten
(I) Abtrennung der festen Blutplasmapartikeln von der flüssigen Phase durch Zentrifugieren und Abführen der flüssigen Phase,
II) Absaugen der nach dem Abtrennen der Blutplasmapartikeln in der Trommel noch vorhandenen Flüssigkeit, insbesondere durch die Zulaufleitung, wobei die Trommel bevorzugt wenigstens kurzzeitig, insbesondere für mindestens 5 sec, besonders bevorzugt mindestens 10 sec. zum Stillstand gebracht wird,
(III) Öffnen der Austragsschlitze und Austrag des Sediments aus festen Blutplasmapartikeln aus der Trommel durch Zentrifugalkraft in einen insbesondere unterhalb der Trommel befindlichen Auffangbehälter.

Bevorzugt ist ein Verfahren, dadurch gekennzeichnet, dass die Trommel vor dem Verfahrensschritt I) temperiert wird, insbesondere auf eine Temperatur von ± 5°C im Verhältnis zur Temperatur der einlaufenden Blutplasmasuspension gebracht wird. Die Temperierung der Trommel vor dem Verfahrensschritt I) erfolgt besonders bevorzugt bei rotierender Trommel, ganz besonders bevorzugt bei einer Trommeldrehzahl im Bereich von 20 % bis 70 % der Trommeldrehzahl zum Zentrifugieren im Verfahrensschritt I).

Dabei kann die Trommeldrehzahl über den gesamten Zeitraum der Vorkühlung konstant sein oder in zwei oder mehreren Stufen oder kontinuierlich gesteigert werden.

Die Vortemperierung der Trommel vor dem Verfahrensschritt I) erfolgt insbesondere durch Einspeisung einer Vorkühlflüssigkeit über die Zulaufleitung, bevorzugt mit einer Temperatur im Bereich von ± 5 °C relativ zur Zulauftemperatur der Blutplasmasuspension.

Besonders vorteilhaft ist ein ausgewähltes Verfahren, bei dem nach der Vortemperierung der Trommel vor dem Verfahrensschritt I) die Vorkühlflüssigkeit über die Zulaufleitung aus der Trommel abgesaugt wird.

Während der Absaugung kann durch einen oder mehrere Zwischenschleuderschritte die zwischen den Tellereinbauten befindliche Kapillarflüssigkeit ausgeschleudert werden, wobei die Absaugung während der Trommelrotation ganz, teilweise oder überhaupt nicht unterbrochen werden kann.

Eine weitere bevorzugte Variante des Verfahrens besteht darin, dass während des Verfahrensschrittes I) die in der Trommel separierte flüssige Phase durch eine oberhalb der Tellereinbauten positionierte Pumpvorrichtung aufgenommen und über eine Ableitung abgeführt wird.

Zur Begrenzung der Temperatur der abgeführten geklärten Flüssigkeit relativ zur Temperatur der zulaufenden Suspension kann der Ablauf der Klarflüssigkeit drucklos oder bei einem auf die Rohrleitungsdruckverluste beschränkten Druck erfolgen.

Besonders bevorzugt wird zwischen den Verfahrensschritten I) und II) in einer zusätzlichen Schleuderphase bei abgeschalteter Suspensionszufuhr das Blutplasmasediment bei einer Trommeldrehzahl von 80 % bis 130 % der Separationsdrehzahl im Schritt I) weiter verdichtet.

Im Verfahrensschritt II) erfolgt besonders bevorzugt die Absaugung der Restflüssigkeit mit einem oder mehreren Zwischenschleuderschritten.

Das Verfahren zur Abtrennung von Blutplasmapartikeln aus einer Blutplasmasuspension wird vorzugsweise so ausgeführt, dass im Verfahrensschritt III) das Blutplasmasediment durch Öffnen der Austragsschlitze der Trommel, bei einer Trommeldrehzahl von 30 % bis 130 % der Separationsdrehzahl in Schritt I), bevorzugt bei Separationsdrehzahl, ausgetragen wird.

In einer weiteren bevorzugten Abwandlung des Verfahrens wird das aus der Trommel ausgetragene Blutplasmasediment in einem in den Auffangbehälter eingelegten, flexiblen Beutel gesammelt, der insbesondere durch ein zwischen dem Beutel und der Innenwand des Auffangbehälters durch einen Vakuumanschluss erzeugtes Vakuum an der Innenwand des Auffangbehälters gehalten wird, gesammelt.

Hierbei kann der Beutel auch während genannten Verfahrensschritte I) bis III) und während der optional genannten vor- und zwischengeschalteten Schritte bis zu einem geeigneten Füllgrad im Auffangbehälter verbleiben.

In einer weiteren bevorzugten Ausführung des Verfahrens werden nach Verfahrensschritt III) unmittelbar die Verfahrensschritte I) bis III) solange wiederholt bis der Auffangbehälter mit Blutplasmasediment bis zu einem vorbestimmten Grad gefüllt ist und das Sediment zur Weiterverarbeitung abgetrennt wird.

Während einem oder mehreren der Verfahrensschritte I) bis III) sowie einem oder mehreren der zwischengeschalteten Schritte wird unabhängig voneinander besonders bevorzugt die Trommel sowie das ausgetragene Blutplasmasediment durch Mantelkühlung der diese umgebenden Teile der Zentrifuge, insbesondere des Gehäuses und/oder des Auffangbehälters mittels eines flüssigen Kühlmediums im Temperaturbereich von + 2 °C bis - 50 °C kühlt.

Eine besonders ausgewählte Variante des Verfahrens ist dadurch gekennzeichnet, dass während des gesamten Verfahrens oder während ausgewählter Teilschritte die Trommel und das Sediment durch die Einspeisung von Flüssigstickstoff, insbesondere durch einen oder mehrere am Gehäuse, am Umlenkring oder am Auffangbehälter angebrachten Anschlüsse in den die Trommel umgebenden Raum gekühlt wird und der gasförmige Stickstoff über einen, bevorzugt im Gehäuse positionierten Abgasstutzen abgeführt wird. Besonders bevorzugt wird die Kühlung der Trommel und des Sedimentes wenigstens vor Entnahme des Sediments durchgeführt. Vorzugsweise wird in den oberen und unteren Bereich des die Trommel umgebenden Raums, gleichzeitig flüssiger Stickstoff eingeleitet.

In einer bevorzugten Variante des Verfahrens wird zur Prozesskontrolle während des Verfahrens an einer oder mehreren Stellen die Oberflächentemperatur der Trommel, insbesondere durch ein vorzugsweise am Gehäuse angebrachtes, berührungslos messendes Temperaturmessgerät kontrolliert.

Zentrifugen mit Tellereinbauten sind typischer Weise ausgerüstet mit einem zentralen Zulauf für die Suspension und in der Trommel befindlichen konischen Tellern, welche durch die vorhandene Fliehkraft und die kurzen Sedimentationswege sowie die große trennaktive Fläche als Abscheider für feine Partikeln dienen. Die abgeschiedenen Partikeln gleiten entlang der Teller in den die Teller umgebenden Feststoffsammelraum zum größten Durchmesser der Trommel hin. Die geklärte Flüssigkeit wird an der Innenseite der Teller mittels eines als Pumpenlaufrad ausgebildeten sogen. Greifers unter Druck oder nahezu drucklos abgeführt. Es sind Zentrifugen mit Tellereinbauten mit stehender oder hängender Trommel bekannt. Eine grundsätzlich geeignete Zentrifuge, die an das vorliegende Verfahren angepasst werden kann, ist aus DE 198 46 535 A1 bekannt.

Das erfindungsgemäße Verfahren zur Abtrennung von Blutplasmapartikeln zeichnet sich z.B. gegenüber der Anwendung einer vertikalen Vollmantelzentrifuge vor allem dadurch aus, dass die maschinenbezogene Durchsatzleistung bei vergleichsweise geringer Drehzahl höher ist und dadurch ein kostengünstigeres Verfahren realisiert werden kann. Weiterhin verursachen vorzugsweise eingesetzte Zentrifugen mit Tellereinbauten durch die einfache Bauweise vergleichsweise niedrige Investitionskosten und sind konstruktionsbedingt einfacher bezüglich Montage und Wartung. Durch die relativ zur vertikalen Vollmantelzentrifuge geringeren Drehzahlen ist die entstehende Luftreibungswärme bei einer Zentrifuge mit Tellereinbauten relativ gering. Ein Betreiben der Zentrifuge im Vakuum zur Einhaltung der für Blutplasmaprodukte nötigen geringen Temperaturen ist daher nicht erforderlich. Die Kühlung der Trommel und des Produktes kann daher lediglich, insbesondere durch eine Mantelkühlung der die Trommel umgebenden Bauteile erfolgen oder kann bedarfsweise durch die Eindüsung von Flüssigstickstoff in den die Trommel umgebenden Raum unterstützt werden.

Das erfindungsgemäße Verfahren zeichnet sich gegenüber den Verfahren, die Blutplasmapartikeln mit Hilfe von Kammerseparatoren oder durch Filtration abtrennen, vor allem durch einen deutlich höheren Automatisierungsgrad aus. Auch die Reinigung der Trommel und der produktberührten Teile ist, im Gegensatz zu Kammerseparator- und Filtrationsverfahren, mit einer Zentrifuge mit Tellereinbauten automatisiert durchführbar. Das Risiko einer Kontamination des Bedienpersonals mit Produkt oder des Produkts mit Verschmutzungen ist daher bei dem erfindungsgemäßen Verfahren geringer. Hierdurch wird den gestiegenen und in Zukunft möglicherweise weiter steigenden Hygieneanforderungen Rechnung getragen.

Das erfindungsgemäße Verfahren kombiniert also die wesentlichen Vorteile von Verfahren mit vertikalen Vollmantelzentrifugen, wie der automatische Produktaustrag und die automatische Reinigung mit den Vorteilen der mit Kammerseparatoren oder Filtern arbeitenden Verfahren, wie hohe Durchsatzleistungen, einfache Bauteile und kostengünstiger Betrieb.

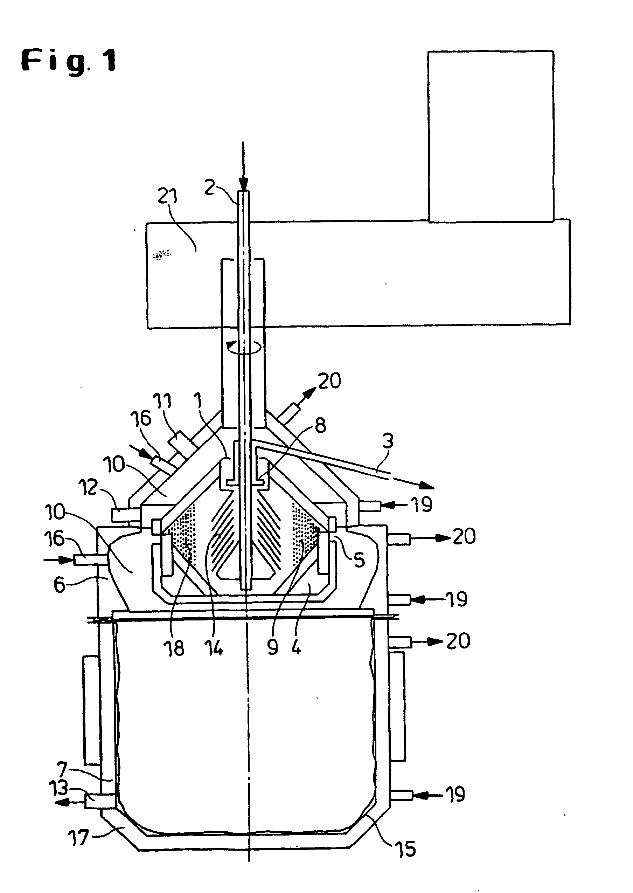

Nachfolgend wird das erfundene Verfahren unter Bezugnahme auf die Figur 1 beispielhaft näher beschrieben. Die Figur 1 zeigt eine für das erfindungsgemäße Verfahren eingesetzte Zentrifuge in teilgeschnittener Darstellung.

### Beispiel

Das Verfahren teilt sich im Wesentlichen in drei Verfahrensschritte ein. Dies sind die Abtrennung der Blutplasmapartikeln aus der Blutplasmasuspension (Verfahrensschritt I), das Absaugen der in der Trommel 4 noch vorhandenen Flüssigkeit (Verfahrensschritt II) und der Austrag des Blutplasmasediments aus der Trommel 4 mit anschließender Umlenkung in einen unterhalb der Trommel 4 befindlichen Auffangbehälter 7 durch einen Umlenkring 6 (Verfahrensschritt III).

Da Blutplasma sehr temperaturempfindlich ist, wird die Trommel 4 vor Verfahrenschritt I vorgekühlt. Dies wird durch Einspeisung einer Vorkühlflüssigkeit durch die Zulaufleitung 2 bei rotierender Trommel geschehen und wahlweise durch eine Mantelkühlung einzelner oder aller die Trommel umgebender Bauteile wie Gehäuse 1, Umlenkring 6 oder Auffangbehälter 7 sowie durch Einspeisung von flüssigem Stickstoff in den die Trommel umgebenden Raum 10 durch einen oder mehrere am Gehäuse 1, am Umlenkring 6 oder am Auffangbehälter 7 angebrachte Anschlüsse 16 erreicht. Die so auf die gewünschte Temperatur gebrachte Trommel wird anschließend im stehenden Zustand durch Absaugen der Vorkühlflüssigkeit durch die Zulaufleitung 2 entleert, um eine Kontamination des Produkts mit der Vorkühlflüssigkeit zu vermeiden. Da zwischen den Spalten der Tellereinbauten 14 wegen der Kapillarwirkung Vorkühlflüssigkeit verbleiben kann, wird die Trommel 4 während des Absaugens oder während einer Unterbrechung des Absaugvorgangs in Rotation versetzt, wodurch die zwischen den Tellereinbauten 14 noch eventuell befindliche Vorkühlflüssigkeit herausgeschleudert und nach dem Stillstand der Trommel 4 ebenfalls abgesaugt wird.

Während Verfahrensschritt I) wird die Blutplasmasuspension über die Zulaufleitung 2 in den unteren Bereich der Trommel 4 eingespeist, wobei durch Rotation der Zulaufleitung 2 mit der Trommel 4 mittels des Antriebs 21 die zulaufende Suspension schonend vorbeschleunigt wird. Die geklärte Flüssigkeit wird oberhalb der Tellereinbauten 14 von einem sogenannten Greifer 8, der wie ein Pumpenlaufrad ausgestaltet ist, aufgenommen und über eine damit verbundene Leitung 3 abgeführt. Zur Verringerung der Temperatur der ablaufenden Klarflüssigkeit relativ zur Temperatur der zulaufenden Suspension kann die Klarflüssigkeit durch die Leitung 3 drucklos ablaufen.

Am Ende des Verfahrensschritts I), wenn der die Tellereinbauten 14 umgebende Feststoffsammelraum 9 wenigstens zum Teil mit Feststoff gefüllt ist, schließt sich im Bedarfsfall eine sogenannte Nachschleuderphase an, bei der die Trommel 4 in Rotation gehalten wird ohne dabei weiterhin frische Suspension zuzuführen, um damit durch die Zentrifugalkräfte das in der Trommel 4 befindliche Blutplasmasediment zu verdichten und damit den Gehalt an Flüssigkeit weiter zu reduzieren.

Nach Verfahrensschritt I) bzw. nach der Nachschleuderphase bzw. vor Verfahrensschritt III) wird in Verfahrensschritt II) die in der Trommel 4 noch befindliche Flüssigkeit bei stehender Trommel 4 über die Zulaufleitung 2 abgesaugt. Hierdurch wird ein Austrag des Blutplasmasediments ohne Flüssigkeit möglich, wodurch sich die Feststoffkonzentration des ausgetragenen Blutplasmasediments wesentlich steigern lässt.

Zur Einleitung des Verfahrensschritts III) wird die Trommel 4 beschleunigt und durch Öffnen der Austragsschlitze 5 der Austrag des Blutplasmasediments 18 eingeleitet.

Das ausgeschleuderte Blutplasmasediment 18 wird durch einen sogenannten Umlenkring 6 in Richtung des darunter befindlichen Auffangbehälters 7 umgelenkt und entweder vom Auffangbehälter 7 selber oder, wie bei Figur 1, durch einen in den Auffangbehälter 7 eingelegten flexiblen Beutel 15 aufgefangen. Bei Verwendung eines flexiblen Beutels 15 wird dieser wahlweise durch ein, über einen oder mehrere Vakuumanschlüsse 13 am Auffangbehälter 7, zwischen dem Beutel 15 und der Innenwand des Auffangbehälters 7 erzeugtes Vakuum an der Innenwand des Auffangbehälters 7 festgehalten werden. Der flexible Beutel 15 ist dabei so stabil ausgeführt, dass er vor Beginn des Verfahrens in den Auffangbehälter 7 eingelegt werden kann und während des gesamten Verfahrens im Auffangbehälter 7 verbleibt kann und den Scherkräften durch die Luftreibung infolge der Rotation der Trommel 4 sowie den beim Austrag des Blutplasmasediments entstehenden Kräften widersteht.

Nach dem Austrag des Blutplasmasediments kann je nach Füllgrad des Auffangbehälters 7 bzw. des flexiblen Beutels 15 unmittelbar ein neuer Verfahrenszyklus mit Verfahrenschritt I) beginnen oder zunächst der Auffangbehälter 7 bzw. der im Auffangbehälter 7 liegende Beutel 15 bei still stehender Trommel 4 gewechselt oder bedarfsweise gereinigt werden, bevor mit Verfahrensschritt I) ein neuer Verfahrenszyklus beginnt.

Im Fall eines Wechsels des Auffangbehälters oder des im Auffangbehälter 7 liegenden Beutels 15 wird bedarfsweise das ausgetragene Blutplasmasediment vor der Entnahme bei rotierender Trommel 4 und unter weiterer Einspeisung von Flüssigstickstoff 16 nachgekühlt werden, bevor es entnommen wird.

Während des gesamten Verfahrens oder nur während einzelner Verfahrensschritte oder Zwischenschritte wird die Trommel 4 und das Produkt wahlweise oder kombiniert durch eine Mantelkühlung einzelner oder aller die Trommel umgebender Bauteile wie Gehäuse 1, Umlenkring 6 oder Auffangbehälter 7 (Mantel 17) gekühlt. Das Kältemittel (Glykol/Wasser; 50/50) wird an dem Stutzen 19 eingeleitet und an dem Stutzen 20 abgeleitet. Durch Einspeisung von flüssigem Stickstoff durch einen oder mehrere am Gehäuse 1, am Umlenkring 6 oder am Auffangbehälter 7 angebrachten Anschlüsse 16 in den die Trommel umgebenden Raum 10, vor allem in den oberen und unteren Bereich des die Trommel umgebenden Raums 10, wird die Trommel und das Sediment zusätzlich gekühlt. Stickstoffgas wird über einen Abgasstutzen 11 wieder abgeführt.

Während einzelner ausgewählter Verfahrensschritte wird die Oberflächentemperatur der Trommel 4 durch ein berührungslos messendes Temperaturmessgerät 12, welches am Gehäuse 1 angebracht ist, gemessen. Dies hat den besonderen Vorteil, dass durch Anpassung der Zentrifugenkühlung die Oberflächentemperatur der Trommel 4 der Zulauftemperatur der Blutplasmasuspension angepasst werden kann und so eine Wärmeleitung von außen in die Trommel hinein mit der Folge der Erwärmung des in der Trommel abgeschiedenen Blutplasmasediments vermieden werden kann.

### Beispiel 1

Mit dem beschriebenen Verfahren konnten innerhalb von 70 min in 5 Zyklen 22,6 kg eines Blutplasmaproteins abgetrennt und vollautomatisch aus der Trommel 4 ausgetragen werden. Hiervon entfielen ca. 30 % der Zeit auf das Abtrennen der Blutplasmapartikeln in Verfahrensschritt I. Zwischen den Verfahrensschritten I und II wurde eine Nachschleuderphase von 5 min realisiert, um das in der Trommel abgetrennte Blutplasmasediment weiter zu verdichten.

Die Trommeldrehzahl betrug während der Abtrennung der Blutplasmapartikeln (Verfahrenschritt I) 7000 l/min. Die Trommel 4 wurde vor Beginn des Verfahrenschritts I durch Einspeisung eines Wasser/Ethanol-Gemischs als Vorkühlflüssigkeit mit einer Temperatur im Bereich von -5°C bis -10°C vorgekühlt. Diese Vorkühlung wurde durch eine Mantelkühlung des Gehäuses 1 (-10°C), des Umlenkrings 6 (-20°C) sowie des Auffangbehälters 7 (-20°C) und der Einspeisung von Flüssigstickstoff an Gehäuse 1 und Umlenkring 6 unterstützt. Diese Kühlung wurde auch für die nachfolgenden Verfahrensschritte II und III beibehalten. Während der Vorkühlphase wurde die Trommeldrehzahl zunächst auf 4000 l/min und nach Erreichen einer Trommeltemperatur von etwa -4°C auf 7000 l/min eingestellt. Hierdurch konnte eine Trommeltemperatur, die durch ein berührungslos arbeitendes Temperaturmessgerät 12 aufgenommen wurde, von -4 bis -6°C erreicht werden.

Die Temperatur der während des Verfahrenschrittes I über die Zulaufleitung 2 eingespeisten Blutplasmasuspension betrug ca. -5°C. Durch die drucklose Abfuhr der geklärten Blutplasmaflüssigkeit über die Ablaufleitung 3 konnte die Erwärmung der Flüssigkeit relativ zur Zulauftemperatur auf nur etwa 1,0°C begrenzt werden. Im Anschluss an den letzten Verfahrenszyklus wurde das ausgetragene Blutplasmasediment durch eine 5 Minuten andauernde Nachkühlphase bei einer Trommeldrehzahl von 1000 l/min und unter Einspeisung von Flüssigstickstoff in den die Trommel 4 umgebenden Raum 10 nachgekühlt. Das ausgetragene Blutplasmasediment hatte hiernach eine Temperatur von - 5°C bis -6°C.

### Beispiel 2

In einem anderen Beispiel wurde eine andere Blutplasmafraktion abgetrennt. Hierbei konnten innerhalb von 81 min in 4 Zyklen 16,3 kg Blutplasmasediment abgetrennt und vollautomatisch ausgetragen werden. Hiervon entfielen ca. 22 % der Zeit auf das Abtrennen der Blutplasmapartikeln in Verfahrensschritt I. Zwischen den Verfahrensschritten I und II wurde eine Nachschleuderphase von jeweils 15 min realisiert, um das in der Trommel abgetrennte Blutplasmasediment zu verdichten.

Die Trommeldrehzahl während der Abtrennung der Blutplasmapartikeln betrug auch hier 7000 l/min. Vor Beginn des Verfahrenschritts I wurde die Trommel 4 durch Einspeisung eines Wasser/Ethanol-Gemischs als Vorkühlflüssigkeit über die Zulaufleitung 2 mit einer Temperatur im Bereich von -10°C bis -13°C vorgekühlt. Die Mantelkühlung der die Trommel 4 umgebenden Bauteile Gehäuse 1, Umlenkring 6 und Auffangbehälter 7 lag im Bereich von -17°C bis -23°C. Die Kühlung wurde auch hier durch Einspeisung von Flüssigstickstoff an Gehäuse 1 und Umlenkring 6 (Stützen 16) unterstützt. Diese Kühlung wurde auch für die nachfolgenden Verfahrensschritte II und III beibehalten. In der Vorkühlphase wurde auch hier stufenweise die Trommeldrehzahl von zunächst 4000 1/min auf 7000 l/min gesteigert.

Während der Vorkühlphase wurde die Trommeldrehzahl zunächst auf 4000 1/min und nach erreichen einer Trommeltemperatur von etwa -5°C auf 7000 1/min eingestellt. Hierdurch konnte eine Trommeltemperatur von -1°C bis -7°C erreicht und gehalten werden. Die Temperatur der während Verfahrenschritt I über die Zulaufleitung 2 eingespeisten Blutplasmasuspension betrug -6°C bis -7°C. Die geklärte Flüssigkeit wurde auch hier drucklos über die Ablaufleitung 3 abgeführt. Die Erwärmung der Flüssigkeit relativ zur Zulauftemperatur betrug in diesem Fall < 1°C. In diesem Versuch wurde keine Nachkühlphase zur Erreichung der gewünschten Temperatur des ausgetragenen Blutplasmasediments bei niedriger Trommeldrehzahl benötigt. Das ausgetragene Blutplasmasediment hatte eine Temperatur von -5°C bis -6°C.

## Patentansprüche

1. Verfahren zur Abtrennung von Blutplasmapartikeln aus einer Blutplasmasuspension in einer selbstaustragenden Zentrifuge, wenigstens aufweisend ein gegebenenfalls kühlbares Gehäuse (1), eine Zuleitung für die Suspension (2), eine Ableitung (3) für die geklärte Flüssigkeit, eine Trommel (4), die insbesondere hängend angeordnet mit einem obenliegenden Antriebsteil verbunden ist, und mit zwei oder mehr Austragsschlitzen (5) und axial gestapelten Tellereinbauten (14) versehen ist, und einen gegebenenfalls kühlbar ausgeführten Auffangbehälter (7), wobei das Verfahren wenigstens besteht aus den Verfahrensschritten
(I) Abtrennung der festen Blutplasmapartikeln von der flüssigen Phase durch Zentrifugieren und Abführen der flüssigen Phase,
(II) Absaugen der nach dem Abtrennen der Blutplasmapartikeln in der Trommel (4) noch vorhandenen Flüssigkeit, wobei die Trommel bevorzugt wenigstens kurzzeitig, insbesondere für mindestens 5 sec, besonders bevorzugt mindestens 10 sec. zum Stillstand gebracht wird,
(III) Öffnen der Austragsschlitze (5) und Austrag des Sediments aus festen Blutplasmapartikeln aus der Trommel (4) durch Zentrifugalkraft in einen insbesondere unterhalb der Trommel (4) befindlichen Auffangbehälter (7).

2. Verfahren nach Anspruch 1, **dadurch gekennzeichnet, dass** die Trommel (4) vor dem Verfahrensschritt I) temperiert wird, insbesondere auf eine Temperatur von ± 5°C im Verhältnis zur Temperatur der einlaufenden Blutplasmasuspension gebracht wird.

3. Verfahren nach Anspruch 2, **dadurch gekennzeichnet, dass** die Vortemperierung der Trommel (4) vor dem Verfahrensschritt I) bei rotierender Trommel (4) erfolgt, bevorzugt bei einer Trommeldrehzahl im Bereich von 20 % bis 70 % der Trommeldrehzahl zum Zentrifugieren im Verfahrensschritt I).

4. Verfahren nach einem der Ansprüche 2 bis 3, **dadurch gekennzeichnet, dass** die Vortemperierung der Trommel (4) vor dem Verfahrensschritt I) durch Einspeisung einer Vorkühlflüssigkeit über die Zulaufleitung (2), bevorzugt mit einer Temperatur im Bereich von ± 5 °C relativ zur Zulauftemperatur der Blutplasmasuspension erfolgt.

5. Verfahren nach Anspruch 4, **dadurch gekennzeichnet, dass** nach der Vortemperierung der Trommel (4) vor dem Verfahrensschritt I) die Vorkühlflüssigkeit über die Zulaufleitung (2) aus der Trommel (4) abgesaugt wird.

6. Verfahren nach einem der Ansprüche 1 bis 5, **dadurch gekennzeichnet, dass** während des Verfahrensschrittes I) die in der Trommel (4) separierte flüssige Phase durch eine oberhalb der Tellereinbauten positionierte Pumpvorrichtung (8) aufgenommen und über eine Ableitung (3) abgeführt wird.

7. Verfahren nach einem der Ansprüche 1 bis 6, **dadurch gekennzeichnet, dass** zwischen den Verfahrensschritten I) und II) in einer zusätzlichen Schleuderphase bei abgeschalteter Suspensionszufuhr das Blutplasmasediment bei einer Trommeldrehzahl von 80 % bis 130 % der Separationsdrehzahl im Schritt I) weiter verdichtet wird.

8. Verfahren nach einem der Ansprüche 1 bis 7, **dadurch gekennzeichnet, dass** im Verfahrensschritt II) die Absaugung der Restflüssigkeit mit einem oder mehreren Zwischenschleuderschritten erfolgt.

9. Verfahren nach einem der Ansprüche 1 bis 8, **dadurch gekennzeichnet, dass** in Verfahrensschritt III) das Blutplasmasediment durch Öffnen der Austragsschlitze (5) der Trommel, bei einer Trommeldrehzahl von 30 % bis 130 % der Separationsdrehzahl in Schritt I), bevorzugt bei Separationsdrehzahl, ausgetragen wird.

10. Verfahren nach einem der Ansprüche 1 bis 9, **dadurch gekennzeichnet, dass** das aus der Trommel (4) ausgetragene Blutplasmasediment in einem in den Auffangbehälter (7) eingelegten, flexiblen Beutel (15) gesammelt wird, der insbesondere durch ein zwischen dem Beutel (15) und der Innenwand des Auffangbehälters (7) durch einen Vakuumanschluss (13) erzeugtes Vakuum an der Innenwand des Auffangbehälters (7) gehalten wird.

11. Verfahren nach einem der Ansprüche 1 bis 10, **dadurch gekennzeichnet**, das nach Verfahrensschritt III) unmittelbar die Verfahrensschritte I) bis III) wiederholt werden, so lange bis der Auffangbehälter (7) mit Blutplasmasediment bis zu einem vorbestimmten Grad gefüllt ist und das Sediment zur Weiterverarbeitung entnommen wird.

12. Verfahren nach einem der Ansprüche 1 bis 11, **dadurch gekennzeichnet, dass** während einem oder mehreren der Verfahrensschritte I) bis III) sowie einem oder mehreren der zwischengeschalteten Schritte unabhängig voneinander die Trommel (4) sowie das ausgetragene Blutplasmasediment durch Mantelkühlung der diese umgebenden Teile der Zentrifuge, insbesondere des Gehäuses (1) und/oder des Auffangbehälters (7) mittels eines flüssigen Kühlmediums im Temperaturbereich von + 2 °C bis - 50 °C kühlt.

13. Verfahren nach einem der Ansprüche 1 bis 12, **dadurch gekennzeichnet, dass** während des gesamten Verfahrens oder während ausgewählter Teilschritte, bevorzugt wenigstens vor der Entnahme des Sediments, die Trommel und das Sediment durch die Einspeisung von Flüssigstickstoff in den die Trommel (4) umgebenden Raum (10) gekühlt wird und der gasförmige Stickstoff über einen, bevorzugt im Gehäuse positionierten Abgasstutzen (11) abgeführt wird.

14. Verfahren nach einem der Ansprüche 1 bis 13, **dadurch gekennzeichnet, dass** während des Verfahrens an einer oder mehreren Stellen die Oberflächentemperatur der Trommel (4), insbesondere durch ein vorzugsweise am Gehäuse (1) angebrachtes, berührungslos messendes Temperaturmessgerät (12) kontrolliert wird.

## Claims

1. Method for the separation of blood plasma particles from a blood plasma suspension in a self-discharging centrifuge, having at least an optionally coolable housing (1), an admission line (2) for the suspension, a removal line (3) for the clarified liquid, a drum (4), which in particular is suspended and is connected to a drive part lying above it, and is provided with two or more discharge slits (5) and axially stacked baffle plates (14), and an optionally coolable collecting container (7), the method consisting at least of the following method steps
(I) separating the solid blood plasma particles from the liquid phase by centrifuging and removal of the liquid phase,
(II) suctioning off the liquid still present in the drum (4) after separation of the blood plasma particles, the drum preferably being brought to a stop at least for a short time, in particular for at least 5 seconds, particularly preferably for at least 10 seconds,
(III) opening the discharge slits (5) and discharging the sediment of solid blood plasma particles from the drum (4), by centrifugal force, into a collecting container (7) located in particular underneath the drum (4).

2. Method according to Claim 1, **characterized in that** the temperature of the drum (4) is regulated before method step I), in particular brought to a temperature of ± 5°C in relation to the temperature of the inflowing blood plasma suspension.

3. Method according to Claim 2, **characterized in that** the preliminary temperature regulation of the drum (4) before method step I) takes place with the drum (4) rotating, preferably at a drum speed in the range of from 20% to 70% of the drum speed used for the centrifuging in method step I).

4. Method according to either of Claims 2 and 3, **characterized in that** the preliminary temperature regulation of the drum (4) before method step I) takes place by feeding a precooling liquid via the admission line (2), preferably at a temperature in the range of ± 5°C relative to the inflow temperature of the blood plasma suspension.

5. Method according to Claim 4, **characterized in that**, after the preliminary temperature regulation of the drum (4) before method step I), the precooling liquid is suctioned off from the drum (4) via the admission line (2).

6. Method according to one of Claims 1 to 5, **characterized in that**, during method step I), the liquid phase separated in the drum (4) is taken up by a pump device (8) positioned above the baffle plates and is removed via a removal line (3).

7. Method according to one of Claims 1 to 6, **characterized in that**, between method steps I) and II), in an additional centrifuging phase with the suspension delivery switched off, the blood plasma sediment is further compacted at a drum speed of 80% to 130% of the separation speed in step I).

8. Method according to one of Claims 1 to 7, **characterized in that**, in method step II), the residual liquid is suctioned off in one or more intermediate centrifuging steps.

9. Method according to one of Claims 1 to 8, **characterized in that**, in method step III), the blood plasma sediment is discharged by opening the discharge slits (5) of the drum, at a drum speed of 30% to 130% of the separation speed in step I), preferably at the separation speed.

10. Method according to one of Claims 1 to 9, **characterized in that** the blood plasma sediment discharged from the drum (4) is collected in a flexible bag (15) which is fitted into the collecting container (7) and which is held against the inner wall of the collecting container (7) in particular by a vacuum which a vacuum attachment (13) generates between the bag (15) and the inner wall of the collecting container (7).

11. Method according to one of Claims 1 to 10, **characterized in that**, after method step III), the method steps I) to III) are immediately repeated, until the collecting container (7) is filled with blood plasma sediment to a predetermined degree, and the sediment is removed for further processing.

12. Method according to one of Claims 1 to 11, **characterized in that**, during one or more of method steps I) to III) and one or more of the intermediate steps, the drum (4) and the discharged blood plasma sediment cools, independently of one another, by cooling the jacket of those parts of the centrifuge surrounding them, in particular of the housing (1) and/or of the collecting container (7), by means of a liquid cooling medium, in the temperature range of + 2°C to - 50°C.

13. Method according to one of Claims 1 to 12, **characterized in that** during the entire method, or during selected steps thereof, preferably at least before removal of the sediment, the drum and the sediment is cooled by feeding liquid nitrogen into the space (10) surrounding the drum (4), and the gaseous nitrogen is removed via an exhaust gas pipe (11) preferably positioned in the housing.

14. Method according to one of Claims 1 to 13, **characterized in that**, during the method, the surface temperature of the drum (4) is checked at one or more locations, in particular by a temperature-measuring device (12) which is preferably arranged on the housing (1) and conducts contactless measurement.

## Revendications

1. Procédé de séparation des particules du plasma sanguin hors d'une suspension de plasma sanguin, dans une centrifugeuse à déversement automatique, comportant au moins un boîtier (1), apte à être refroidi le cas échéant, une conduite d'admiesion de la suspension (2), une conduite d'évacuation (3) du liquide clarifié, un tambour (4), qui est relié, en particulier suspendu à un élément d'entraînement supérieur et qui comporte deux ou davantage de fentes de déversement (5) et des inserts en forme de platine (14), empilés dans le sens axial, et un collecteur (7), apte à être refroidi le cas échéant, le procédé étant formé par au moins les étapes suivantes :
(I) séparation par centrifugation des particules solides du plasma sanguin hors de la phase liquide et évacuation de la phase liquide,
(II) aspiration du liquide encore contenu dans le tambour (4) à la fin de la séparation des particules du plasma sanguin, le tambour (4) étant immobilisé de préférence pendant au moins un court laps de temps, en particulier pendant au moins 5 s, de manière particulièrement préférée, pendant au moins 10 s,
(III) ouverture des fentes de déversement (5) et, sous l'effet de la force centrifuge, déversement hors du tambour (4) du sédiment formé par les particules solides du plasma sanguin dans un collecteur (7) situé en particulier en dessous du tambour (4).

2. Procédé selon la revendication 1, **caractérisé en ce que**, ayant l'étape (I), le tambour (4) est amené en équilibre de température, en particulier à une température de ± 5°C par rapport à la température de la suspension de plasma sanguin introduite.

3. Procédé selon la revendication 2, **caractérisé en ce que** l'équilibrage préliminaire de la température du tambour (4) avant l'étape (I) est effectué avec le tambour (4) en rotation, de préférence avec une vitesse de rotation du tambour dans le domaine de 20 % à 70 % de la vitesse de rotation du tambour pour la centrifugation dans l'étape (I).

4. Procédé selon l'une quelconque des revendications 2 à 3, **caractérisé en ce que** l'équilibrage préliminaire de la température du tambour (4) avant l'étape (I) est effectué par l'introduction d'un liquide de prérefroidissement par l'intermédiaire de la conduite d'admission (2), de préférence à une température dans le domaine de ± 5°C par rapport à la température d'admission de la suspension de plasma sanguin.

5. Procédé selon la revendication 4, **caractérisé en ce qu'**à la suite de l'équilibrage préliminaire de la température du tambour (4) avant l'étape (I), le liquide de prérefroidissement est aspiré hors du tambour (4) par l'intermédiaire de la conduite d'admission (2).

6. Procédé selon l'une quelconque des revendications 1 à 5, **caractérisé en ce que**, pendant l'étape (I), la phase liquide séparée dans le tambour (4) est aspirée par un dispositif de pompage (8), positionné au-dessus des inserts en forme de platine, et est évacuée au moyen d'une conduite d'évacuation (3).

7. Procédé selon l'une quelconque des revendications 1 à 6, **caractérisé en ce que**, entre les étapes (I) et (II), dans une phase de centrifugation supplémentaire sans admission de suspension, le sédiment de plasma sanguin continue à être compacté avec une vitesse de rotation du tambour correspondant à 80 % à 130 % de la vitesse de rotation pendant la séparation dans l'étape (I).

8. Procédé selon l'une quelconque des revendications 1 à 7, **caractérisé en ce que**, dans l'étape (II), le liquide restant est aspiré pendant une ou plusieurs étapes de centrifugation intermédiaire.

9. Procédé selon l'une quelconque des revendications 1 à 8, **caractérisé en ce que**, au cours de l'étape (III), le sédiment de plasma sanguin est déversé sous l'effet de l'ouverture des fentes de déversement (5) du tambour, avec une vitesse de rotation du tambour correspondant à 30 % à 130 % de la vitesse de rotation dans l'étape (I), de préférence à la vitesse de rotation pour la séparation.

10. Procédé selon l'une quelconque des revendications 1 à 9, **caractérisé en ce que** le sédiment de plasma sanguin déversé du tambour (4) est collecté dans une poche (15) flexible, qui est insérée dans le collecteur (7) et qui est maintenue contre la paroi intérieure du collecteur (7) en particulier par le vide généré entre la poche (15) et la paroi intérieure du collecteur (7) via un raccord sous vide (13).

11. Procédé selon l'une quelconque des revendications 1 à 10, **caractérisé en ce que**, à la suite de l'étape (III), les étapes (I) à (III) sont immédiatement répétées, jusqu'à ce que le collecteur (7) recevant le sédiment de plasma sanguin soit rempli jusqu'à un niveau prédéfini et le sédiment est prélevé pour un traitement ultérieur.

12. Procédé selon l'une quelconque des revendications 1 à 11, **caractérisé en ce que** pendant une ou plusieurs des étapes (I) à (III), ainsi que pendant une ou plusieurs des étapes intermédiaires, le tambour (4), de même que le sédiment de plasma sanguin déversé sont refroidis indépendamment l'un de l'autre par un refroidissement des parois des parties de la centrifugeuse entourant celles-ci, en particulier le boîtier (1) et/ou le collecteur (7), au moyen d'un fluide de refroidissement dans le domaine de température de + 2°C à - 50°C.

13. Procédé selon l'une quelconque des revendications 1 à 12, **caractérisé en ce que**, pendant l'ensemble du procédé ou pendant des étapes partielles sélectionnées, de préférence au moins avant le prélèvement du sédiment, le tambour et le sédiment sont refroidis par injection d'azote liquide dans l'enceinte (10) entourant le tambour (4) et l'azote gazeux est évacué par l'intermédiaire d'une tubulure d'échappement du gaz (11) positionnée de préférence dans le carter.

14. Procédé selon l'une quelconque des revendications 1 à 13, **caractérisé en ce que**, pendant le procédé, la température en surface du tambour (4) est contrôlée en un ou plusieurs emplacements, en particulier par un instrument de mesure de la température (12) travaillant sans contact, monté de préférence sur le boîtier (1).
